# EUROPÄISCHE PATENTSCHRIFT

(11) **EP 3 458 808 B1**
(45) Veröffentlichungstag und Bekanntmachung des Hinweises auf die Patenterteilung: **31.05.2023**
(21) Anmeldenummer: 17711657.1
(22) Anmeldetag: 17.03.2017
(51) Int. Cl.: G01C 21/20, B60Q 1/24, G01S 17/931, G01S 13/931, G01S 15/931

(54) **VERFAHREN UND VORRICHTUNG ZUR LOKALISIERUNG EINES FAHRZEUGS**
PROCEDURE AND DEVICE FOR LOCALIZING A VEHICLE
PROCÉDURE ET DISPOSITIF POUR LOCALISER UN VÉHICULE

(30) Priorität: 18.05.2016 DE 102016208488
(43) Veröffentlichungstag der Anmeldung: 27.03.2019
(73) Patentinhaber: Robert Bosch GmbH, 70442 Stuttgart (DE)
(72) Erfinder: ROHDE, Jan, 70192 Stuttgart (DE); MIELENZ, Holger, 73760 Ostfildern (DE)
(86) Internationale Anmeldenummer: PCT/EP2017/056425
(87) Internationale Veröffentlichungsnummer: WO 2017/198358

(56) Entgegenhaltungen:
- DE-A1-102014 011 811
- DE-A1-102014 217 366
- US-B1- 9 063 548
- US-B2- 8 139 115

## Beschreibung

Die vorliegende Erfindung betrifft ein Verfahren sowie eine Vorrichtung zur Lokalisierung eines Fahrzeugs, wobei die Lokalisierung ausgehend von einem Umgebungsmerkmal in der Umgebung des Fahrzeugs erfolgt und die Ausleuchtung des Umgebungsmerkmals dazu angepasst wird.

### Stand der Technik

Die DE 20 2010 002 800 U1 offenbart eine Beleuchtungseinrichtung für ein Kraftfahrzeug, wobei die Beleuchtungseinrichtung ein Lichtmodul mit mindestens einer Hauptlichtquelle zur Erzeugung einer Hauptlichtverteilung so aufweist, dass mindestens eine zusätzliche Lichtquelle zur Ausleuchtung eines Nahfeldes zwischen der Hauptlichtverteilung und dem Kraftfahrzeug in dem Lichtmodul angeordnet ist.

Die US 9 063 548 B1 offenbart zuvor kartierte Fahrspurinformationen zur Positionsbestimmung.

Die DE 10 2014 011 811 A1 offenbart das Abbilden eines Lichtmusters auf eine befahrbare Fläche.

### Offenbarung der Erfindung

Das erfindungsgemäße Verfahren zur Lokalisierung eines Fahrzeugs umfasst die Schritte des unabhängigen Anspruchs 1.

Der Vorteil der Erfindung zeigt sich darin, dass keine zusätzlichen Sensoren verwendet werden um eine Lokalisierung des Fahrzeugs vorzunehmen. Stattdessen kann auf bestehende Sensoren zurückgegriffen werden, indem die Ausleuchtung eines bestimmten Umgebungsmerkmals bewusst angepasst wird, so dass bereits bestehende Sensoren in der Lage sind, eine Lokalisierung ausgehend von diesem Umgebungsmerkmal vorzunehmen.

Erfindungsgemäß erfolgt das Einlesen der ersten Positionsdatenwerte derart, dass die Positionsdatenwerte aus einer Karte entnommen werden, welche das Umgebungsmerkmal umfasst. In einer nicht beanspruchten Alternative erfolgt das Einlesen derart, dass die Positionsdatenwerte von einem externen Server empfangen werden.

Hierin zeigt sich der Vorteil, dass die Ausleuchtung nicht willkürlich erfolgt bzw. ad hoc geschehen muss, sondern das Ausleuchten rechtzeitig geplant und initiiert werden kann, damit die Lokalisierung dann auch schnellstmöglich erfolgen kann. Zudem können bevorzugte Umgebungsmerkmale ausgewählt werden, welche die Lokalisierung schneller, effizienter und zuverlässiger ermöglichen.

Erfindungsgemäß erfolgt das Steuern der Beleuchtungseinheit derart, dass das Umgebungsmerkmal von der Beleuchtungseinheit zumindest anteilig ausgeleuchtet wird.

Erfindungsgemäß erfolgt das Steuern der Beleuchtungseinheit derart, dass das Umgebungsmerkmal von der Beleuchtungseinheit zumindest derart anteilig ausgeleuchtet wird, dass das Umgebungsmerkmal mittels wenigstens eines Sensors des Fahrzeugs erfassbar ist. Dies ist besonders vorteilhaft, da somit die Ausleuchtung derart angepasst wird, dass bereits vorhandene Sensoren eine zuverlässige Lokalisierung, ausgehend von dem Umgebungsmerkmal, ermöglichen. Dies ist eine Grundvoraussetzung um ein sicheres Fahren eines Fahrzeugs, gerade auch eines automatisierten Fahrzeugs, zu garantieren, da viele Fahrassistenzfunktionen, speziell beim automatisierten Fahren, von einer möglichst exakten Position eines Fahrzeugs innerhalb eines Lokalisierungssystems abhängig sind.

Erfindungsgemäß werden die zweiten Positionsdatenwerte bestimmt, indem das zumindest anteilig ausgeleuchtete Umgebungsmerkmal von dem wenigstens einen Sensor des Fahrzeugs erfasst wird und dadurch relative Positionsdatenwerte, welche eine Position des Fahrzeugs relativ zur Position des erfassten Umgebungsmerkmals repräsentieren, bestimmt werden, welche mit den ersten Positionsdatenwerten verknüpft werden.

Der Vorteil liegt darin, dass eine Lokalisierung des Fahrzeugs, bei genauer Kenntnis der Position des Umgebungsmerkmals schnell und zuverlässig erfolgt, da die Position des Fahrzeugs nicht mehr absolut, beispielsweise durch GPS, sondern relativ zum Umgebungsmerkmal bestimmt wird.

Vorzugsweise umfassen die relativen Positionsdatenwerte den Abstand zwischen dem Fahrzeug und dem erfassten Umgebungsmerkmal und/oder die Bewegungsrichtung des Fahrzeugs relativ zum erfassten Umgebungsmerkmal und/oder die Geschwindigkeit des Fahrzeugs.

Der Vorteil zeigt sich hierin, dass der Abstand und/oder die Geschwindigkeit und/oder die Bewegungsrichtung relativ zum Umgebungsmerkmal mittels Sensoren des Fahrzeugs schnell und exakt bestimmt werden kann, da die Lokalisierung des Fahrzeugs ausgehend von dem Umgebungsmerkmal einfach zu bestimmen ist.

Die erfindungsgemäße Vorrichtung zur Lokalisierung eines Fahrzeugs umfasst die Merkmale des unabhängigen Anspruchs 3.

Erfindungsgemäß sind die ersten Mittel zum Einlesen derart ausgebildet, dass die ersten Positionsdatenwerte aus einer Karte entnommen werden, welche das Umgebungsmerkmal umfasst. In einer nicht beanspruchten Alternative ist vorgesehen, dass die Positionsdatenwerte von einem externen Server empfangen werden.

Vorzugsweise sind zweiten Mittel zum Steuern der Beleuchtungseinheit derart ausgebildet, dass das Umgebungsmerkmal von der Beleuchtungseinheit zumindest anteilig ausgeleuchtet wird oder das Umgebungsmerkmal von der Beleuchtungseinheit zumindest derart anteilig ausgeleuchtet wird, dass das Umgebungsmerkmal mittels wenigstens eines Sensors des Fahrzeugs erfassbar ist.

In einer besonders bevorzugten Ausführungsform sind die dritten Mittel zum Bestimmen von den zweiten Positionsdatenwerten derart ausgebildet, dass das zumindest anteilig ausgeleuchtete Umgebungsmerkmal von dem wenigstens einen Sensor des Fahrzeugs erfasst wird und dadurch relative Positionsdatenwerte, welche eine Position des Fahrzeugs relativ zur Position des erfassten Umgebungsmerkmals repräsentieren, bestimmt werden, welche mit den ersten Positionsdatenwerten verknüpft werden.

Vorzugsweise sind die dritten Mittel zum Bestimmen der zweiten Positionsdatenwerte derart ausgebildet, dass die relativen Positionsdatenwerte den Abstand zwischen dem Fahrzeug und dem erfassten Umgebungsmerkmal und/oder die Bewegungsrichtung des Fahrzeugs relativ zum erfassten Umgebungsmerkmal und/oder die Geschwindigkeit des Fahrzeugs umfassen.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:
Figur 1 rein beispielhaft ein Fahrzeug, welches die erfindungsgemäße Vorrichtung zum Ausführen des erfindungsgemäßen Verfahrens mit sich führt.
Figur 2 rein beispielhaft ein Ausführungsbeispiel des erfindungsgemäßen Verfahrens.
Figur 3 rein beispielhaft ein Ausführungsbeispiel in Form eines Ablaufdiagramms des erfindungsgemäßen Verfahrens unter Verwendung der erfindungsgemäßen Vorrichtungen.

### Ausführungsformen der Erfindung

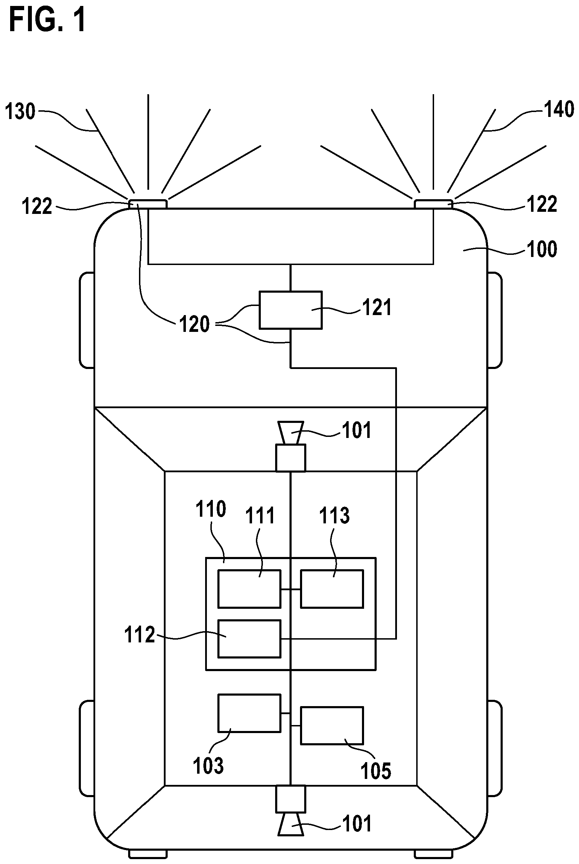

Figur 1 zeigt ein Fahrzeug (100), welches die erfindungsgemäße Vorrichtung (110) umfasst. Weiterhin umfasst das Fahrzeug (100) eine Beleuchtungseinheit (120), welche hier wiederum rein beispielhaft ein Steuergerät (121), Scheinwerfer (122) und Verbindungsleitungen zwischen den Scheinwerfen (122) und dem Steuergerät (121) sowie Verbindungen zwischen dem Steuergerät (121) und der erfindungsgemäßen Vorrichtung (110) umfasst.

Das Fahrzeug (100) umfasst weiterhin Sensoren (101), welche hier rein beispielhaft als Videosensoren dargestellt sind. Bei den Sensoren (101) kann es sich auch um andere Sensortypen handeln, die dazu ausgebildet sind Umgebungsmerkmale (200) in der Umgebung des Fahrzeugs (100) zu erfassen, wie beispielsweise Radar-, Lidar- oder Ultraschallsensoren. Weiterhin stehen die hier beispielshaft gezeigten Sensoren (101) auch für Sensortypen, wie beispielsweise Beschleunigungs- oder Bewegungssensoren, die dazu ausgebildet sind, eine Bewegung und/oder eine Geschwindigkeit des Fahrzeugs (100) zu erfassen.

Das Fahrzeug (100) umfasst weiterhin eine Karte (105), wobei hier unter einer Karte beispielsweise ein Navigationssystem zu verstehen ist, welches Kartenmaterial derart mit sich führt, dass Umgebungsmerkmale (200) in der Karte enthalten sind. Alternativ kann es sich bei der Karte (105) um einen Speicher handeln, auf dem Kartendaten hinterlegt sind. Allgemein kann unter einer Karte (105) im Rahmen des erfindungsgemäßen Verfahrens alles verstanden werden, was Umgebungsmerkmale (200) sowie deren Position abrufbar, beispielsweise mittels der ersten Mittel (111), umfasst.

Weiterhin kann das Fahrzeug (100), wie hier beispielhaft gezeigt, eine Sende- und Empfangsvorrichtung (103) umfassen, welche es ermöglicht Kartendaten, entsprechend dem vorangestellten Absatz, von einem externen Server anzufordern und zu empfangen. Hierbei kann es sich beispielsweise um ein Smartphone (oder andere Geräte die Daten senden und empfangen können) handeln, welches mittels einer kabellosen Verbindung, wie Bluetooth, oder auch mittels eines Kabels mit der erfindungsgemäßen Vorrichtung (110) verbunden ist.

Weiterhin dient die Karte (105), vor allem in Form eines Navigationssystems, und/oder die Sende- und Empfangsvorrichtung (103) dazu, eine Grobposition des Fahrzeugs, beispielsweise mittels GPS, festzulegen. Wenn sich das Fahrzeug (100) nun einem bestimmten Umgebungsmerkmal (200), welches mittels einer Karte (105) eines Navigationssystems erkannt wird, nähert, kann dieses mittels eines Sensors (101) des Fahrzeugs erfasst werden. Unter dem Vorgang des Erfassens kann auch das Erfassen der Koordinaten des Umgebungsmerkmals (200) verstanden werden.

Die erfindungsgemäße Vorrichtung (110) umfasst erste Mittel (111) zum Einlesen von ersten Positionsdatenwerten, welche eine Position des Umgebungsmerkmals (200) in der Umgebung des Fahrzeugs (100) repräsentieren. Dabei sind die ersten Mittel (110) derart ausgebildet, dass sie Zugriff auf die Karte (105) haben, in der die Umgebungsmerkmale (200) hinterlegt sind. Weiterhin können die ersten Mittel (111) auch derart ausgebildet sein, dass sie Daten, die Umgebungsmerkmale (200) sowie deren Positionen umfassen, mittels der Sende- und Empfangsvorrichtung (103) anfordern und einlesen. Wenn ein Umgebungsmerkmal (200) zusammen mit seiner Position eingelesen wurde, wird ein entsprechendes Signal an die zweiten Mittel (112) bereitgestellt, das Informationen derart umfasst, dass die zweiten Mittel (112) Einfluss auf die Beleuchtungseinheit (120) des Fahrzeugs (100) nehmen können, um die Ausleuchtung (130, 140) des Umgebungsmerkmals (200) anzupassen.

Die erfindungsgemäße Vorrichtung (110) umfasst weiterhin zweite Mittel (111) zum Steuern einer Beleuchtungseinheit (120) des Fahrzeugs (100). Dabei erfolgt das Steuern derart, dass die Ausleuchtung (130, 140) eines Umgebungsmerkmals (200) in Abhängigkeit der zuvor erfassten ersten Positionsdatenwerten angepasst wird.

Unter der Anpassung der Ausleuchtung (130, 140) des Umgebungsmerkmals (200) ist beispielsweise eine Bewegung eines Scheinwerfers (122) zu verstehen, die derart ausgeführt wird, dass das Umgebungsmerkmal (200) besser ausgeleuchtet wird als zuvor, was es beispielsweise einem Videosensor (101) des Fahrzeugs (100) ermöglicht, das Umgebungsmerkmal (200) zu erfassen. Weiterhin kann unter der Anpassung auch verstanden werden, dass das Ausleuchten (130, 140) reduziert wird, da es sich bei dem Umgebungsmerkmal (200) um ein reflektierendes Objekt handelt. Aufgrund der Reduzierung kann das Umgebungsmerkmal (200) beispielsweise besser erfasst werden, da der Videosensor (101) nicht mehr überbelichtet ist.

Die erfindungsgemäße Vorrichtung (110) umfasst weiterhin dritte Mittel (113) zum Bestimmen von zweiten Positionsdatenwerten, welche eine Position des Fahrzeugs (100) repräsentieren, ausgehend von der Position des Umgebungsmerkmals (200), dessen Ausleuchtung (130, 140) von der Beleuchtungseinheit (120) des Fahrzeugs (100) angepasst wird. Dabei sind die dritten Mittel (113) derart ausgebildet, dass sie mittels einem oder mehreren Sensoren (101) das Umgebungsmerkmal (200) erfassen und anhand des erfassten Umgebungsmerkmals (200) eine Position des Fahrzeugs (100) bestimmen.

Dabei wird beispielsweise mittels Videosensoren (101) der Abstand (210) zwischen dem Fahrzeug (100) und dem Umgebungsmerkmal (200) bestimmt, indem ein Bild aufgenommen und anschließend das Bild von den dritten Mitteln (113) entsprechend ausgewertet wird. Dabei kann der Abstand (210) beispielsweise mittels vorab bekannten Größenverhältnissen bestimmt werden. Eine weitere Möglichkeit den Abstand zu bestimmen, kann beispielsweise mittels eines Lidar- und/oder eines Ultraschallsensors erfolgen, wobei die Verwendung auch von der jeweiligen Reichweite des Sensors (101) abhängt. Generell können auch mehrere Sensoren unterschiedlichen Typs verwendet werden, welche sich gegenseitig plausibilisieren.

Weiterhin kann mittels Beschleunigungs- und/oder Bewegungs- und/oder Video- und/oder Geschwindigkeitssensoren eine Relativbewegung des Fahrzeugs (100) relativ zum Umgebungsmerkmal (200) bestimmt werden. Nach dem Bestimmen der Relativposition wird anschließend mittels der dritten Mittel (113) eine Position des Fahrzeugs (100) bestimmt, indem die bekannte Position des Umgebungsmerkmals (200) um die relative Position des Fahrzeugs (100) abhängig von dem Umgebungsmerkmal (200) erweitert wird.

Beispielsweise kann mittels eines Programms die Position des Umgebungsmerkmals (200) als Koordinaten in einem Koordinatensystem und die Relativbewegung bzw. die Relativposition des Fahrzeugs (100), gegeben durch den Abstand (210) und/oder die Bewegungsrichtung (220) und/oder die Geschwindigkeit (230), als Vektor in diesem Koordinatensystem erfasst werden. Durch Addition des Vektors zu den Koordinaten des Umgebungsmerkmals (200) wird anschließend die Position des Fahrzeugs (100) im selben Koordinatensystem bestimmt.

Sowohl die ersten Mittel (111), als auch die zweiten Mittel (112) und die dritten Mittel (113) können auf bestehende Vorrichtungen im Fahrzeug (100) zurückgreifen, wie beispielsweise auf ein Steuergerät, als auch in Form von selbständig arbeitenden Recheneinheiten ausgebildet sein. Dazu umfassen die ersten, zweiten und dritten Mittel (111, 112, 113) beispielsweise einen Prozessor, eine Speichereinheit sowie einen Arbeitsspeicher.

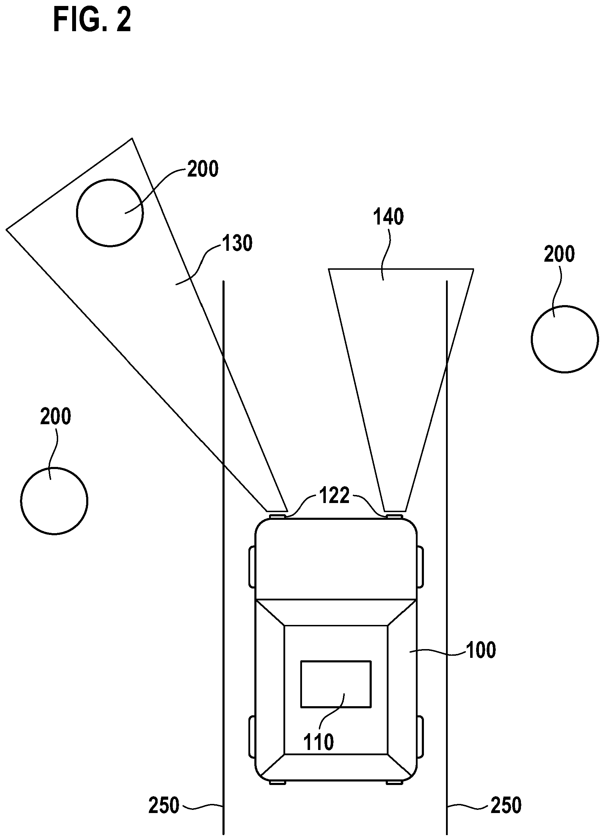

Figur 2 zeigt ein Ausführungsbeispiel des erfindungsgemäßen Verfahrens. Dabei befindet sich das Fahrzeug (100) auf einer Fahrbahn, hier gezeigt durch die beiden Fahrbahnbegrenzungen (250). Das Fahrzeug (100) umfasst die erfindungsgemäße Vorrichtung (110) sowie zwei Scheinwerfer (122), welche hier als Bestandteil der Beleuchtungseinheit (120) des Fahrzeugs (100) rein beispielhaft als Frontscheinwerfer gezeigt sind. Grundsätzlich kann jeder Scheinwerfer des Fahrzeugs (100), wie beispielsweise auch die Heckscheinwerfer, zum Ausführen des erfindungsgemäßen Verfahrens herangezogen werden.

Neben der Fahrbahn, links und rechts, befinden sich drei Umgebungsmerkmale (200). Bei den hier beispielhaft gezeigten Umgebungsmerkmalen (200) kann es ich beispielsweise um Gebäude, Merkmale der Verkehrsinfrastruktur, wie Lichtsignalanlagen oder Leitplanken, landschaftliche Merkmale, wie Seen, Berge, Wälder oder auch einzelne Bäume, und andere Objekte handeln, welche mittels eines Sensors (101) des Fahrzeugs (100) erfasst werden können. Entscheidend für das erfindungsgemäße Verfahren ist dabei, dass jedes Umgebungsmerkmal (200) zusammen mit seiner Position in einer Karte (105) hinterlegt ist bzw. von einem externen Server abgerufen werden kann.

Aufgrund der Kenntnis der sich in Sensorreichweite des Fahrzeugs (100) befindlichen Umgebungsmerkmale (200), wird nun ein Ausleuchtungsbereich (130) eines Scheinwerfers derart angepasst, dass ein Umgebungsmerkmal (200), beispielsweise durch einen Videosensor (101), erfasst werden kann. Durch das somit erfasste Umgebungsmerkmal (200) wird anschließend mittels der dritten Mittel (113) die Position des Fahrzeugs (100) bestimmt. Der Ausleuchtungsbereich (140) des anderen Scheinwerfers bleibt dabei in diesem Ausführungsbeispiel weiterhin in Fahrtrichtung des Fahrzeugs (100) nach vorne gerichtet.

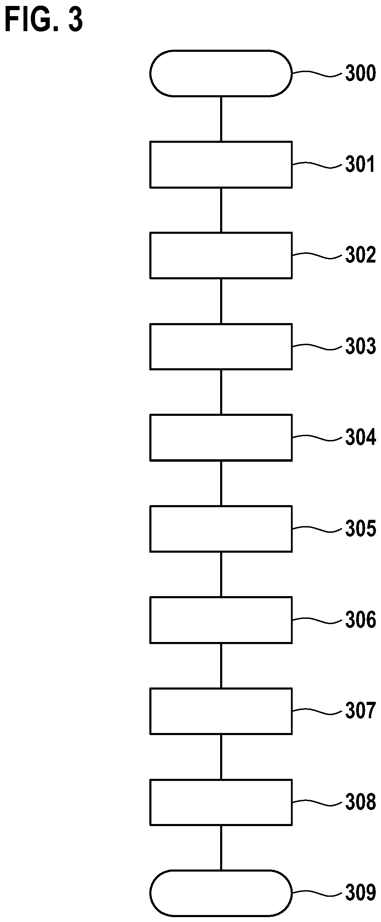

Figur 3 zeigt ein Ausführungsbeispiel des erfindungsgemäßen Verfahrens in Form eines Ablaufdiagramms.

In Schritt 300 beginnt das Verfahren. Dies kann zum Beispiel eintreten, indem eine Fahrassistenzfunktion des Fahrzeugs eine hochgenaue Position des Fahrzeugs (100) benötigt um seine Funktion ordnungsgemäß auszuführen. Die Kenntnis einer hochgenauen Position ist speziell für automatisierte Fahrzeuge von großer Bedeutung. In Schritt 301 wird eine Grobposition des Fahrzeugs (100), beispielsweise mittels einer Karte (105) eines Navigationssystems, bestimmt. Dies kann beispielsweise in Form von GPS-Daten erfolgen. Unter der Grobposition kann hier beispielsweise ein bestimmter Bereich verstanden werden, indem sich das Fahrzeug aufhält ohne die genaue Position zu kennen.

In Schritt 302 werden aufgrund der Kenntnis der Grobposition des Fahrzeugs (100) mittels der ersten Mittel (111) sich in der Nähe des Fahrzeugs befindliche Umgebungsmerkmale (200), welche sich zudem in Reichweite wenigstens eines Sensors (101) des Fahrzeugs (100) befinden, erfasst.

In Schritt 303 wird die Position eines der Umgebungsmerkmale (200), welches für das erfindungsgemäße Verfahren in Frage kommt, an die zweiten Mittel (112) übergeben. In Schritt 304 erfolgt ein Steuern der Beleuchtungseinheit (120) des Fahrzeugs (100) abhängig von der Position des in Frage kommenden, erfassten Umgebungsmerkmals (200) derart, dass dieses Umgebungsmerkmal beispielsweise so ausgeleuchtet wird, dass dieses Umgebungsmerkmal (200) mittels eines Videosensors (100) erfasst werden kann.

In Schritt 305 wird das Umgebungsmerkmal (200) mittels eines Videosensors (101) in Form eines Bildes erfasst.

In Schritt 306 wird mittels der dritten Mittel (113) aus dem Bild ein Abstand (210) zwischen dem Fahrzeug (100) und dem Umgebungsmerkmal (200) bestimmt.

In Schritt 307 wird zusätzlich zum Abstand (210) zwischen dem Fahrzeug (100) und dem Umgebungsmerkmal (200) mittels eines Bewegungssensors (101) eine Bewegungsrichtung (220) des Fahrzeugs relativ zum Umgebungsmerkmal (200) bestimmt.

In Schritt 308 wird aus dem Abstand (210) und der Bewegungsrichtung (220) des Fahrzeugs (100) eine relative Position des Fahrzeugs (100), ausgehend von dem Umgebungsmerkmal (200), und somit die tatsächliche Position des Fahrzeugs (100), beispielsweise im Koordinatensystem des Umgebungsmerkmals (200), bestimmt und an die Fahrassistenzfunktion übergeben.

In Schritt 309 endet das Verfahren.

Selbstverständlich sind noch weitere Ausführungsbeispiele und Mischformen der dargestellten Beispiele möglich.

## Patentansprüche

1. Verfahren zur Lokalisierung eines Fahrzeugs (100) mit den folgenden Schritten:
- Einlesen von ersten Positionsdatenwerten, welche eine Position eines Umgebungsmerkmals (200) in der Umgebung des Fahrzeugs (100) repräsentieren, wobei die ersten Positionsdatenwerte aus einer Karte (105) entnommen werden, welche das Umgebungsmerkmal (200) umfasst;
- Steuern einer Beleuchtungseinheit (120) des Fahrzeugs, abhängig von den eingelesenen ersten Positionsdatenwerten, zur Anpassung einer Ausleuchtung (130, 140) des Umgebungsmerkmals (200), wobei das Steuern der Beleuchtungseinheit (120) derart erfolgt, dass das Umgebungsmerkmal (200) von der Beleuchtungseinheit (120) zumindest derart anteilig ausgeleuchtet wird, dass das Umgebungsmerkmal (200) mittels wenigstens eines Videosensors (101) des Fahrzeugs (100) erfassbar ist; und
- Bestimmen von zweiten Positionsdatenwerten, welche eine Position des Fahrzeugs (100) repräsentieren, ausgehend von der Position des Umgebungsmerkmals (200), dessen Ausleuchtung (130, 140) von der Beleuchtungseinheit (120) des Fahrzeugs (100) angepasst wird, wobei die zweiten Positionsdatenwerte bestimmt werden, indem das zumindest anteilig ausgeleuchtete Umgebungsmerkmal (200) von dem wenigstens einen Videosensor (101) des Fahrzeugs (100) erfasst wird und dadurch relative Positionsdatenwerte, welche eine Position des Fahrzeugs (100) relativ zur Position des erfassten Umgebungsmerkmals (200) repräsentieren, bestimmt werden, welche mit den ersten Positionsdatenwerten verknüpft werden.

2. Verfahren nach Anspruch 1, **dadurch gekennzeichnet, dass** die relativen Positionsdatenwerte den Abstand (210) zwischen dem Fahrzeug (200) und dem erfassten Umgebungsmerkmal (200) und/oder die Bewegungsrichtung (220) des Fahrzeugs (100) relativ zum erfassten Umgebungsmerkmal (200) und/oder die Geschwindigkeit (230) des Fahrzeugs (100) umfassen.

3. Vorrichtung (110) zur Lokalisierung eines Fahrzeugs (100) mit den folgenden Mitteln:
- Erste Mittel (111) zum Einlesen von ersten Positionsdatenwerten, welche eine Position eines Umgebungsmerkmals (200) in der Umgebung des Fahrzeugs (100) repräsentieren, wobei die ersten Mittel (111) zum Einlesen derart ausgebildet sind, dass die ersten Positionsdatenwerte aus einer Karte (105) entnommen werden, welche das Umgebungsmerkmal (200) umfasst;
- Zweite Mittel (112) zum Steuern einer Beleuchtungseinheit (120) des Fahrzeugs (100), abhängig von den eingelesenen ersten Positionsdatenwerten, zur Anpassung einer Ausleuchtung (130, 140) des Umgebungsmerkmals (200), wobei die zweiten Mittel (112) zum Steuern der Beleuchtungseinheit (120) derart ausgebildet sind, dass das Umgebungsmerkmal (200) von der Beleuchtungseinheit (120) zumindest derart anteilig ausgeleuchtet wird, dass das Umgebungsmerkmal (200) mittels wenigstens eines Videosensors (101) des Fahrzeugs (100) erfassbar ist; und
- Dritte Mittel (113) zum Bestimmen von zweiten Positionsdatenwerten, welche eine Position des Fahrzeugs (100) repräsentieren, ausgehend von der Position des Umgebungsmerkmals (200), dessen Ausleuchtung (130, 140) von der Beleuchtungseinheit (120) des Fahrzeugs (100) angepasst wird, wobei die dritten Mittel (113) zum Bestimmen von den zweiten Positionsdatenwerten derart ausgebildet sind, dass das zumindest anteilig ausgeleuchtete Umgebungsmerkmal (200) von dem wenigstens einen Videosensor (101) des Fahrzeugs (100) erfasst wird und dadurch relative Positionsdatenwerte, welche eine Position des Fahrzeugs (100) relativ zur Position des erfassten Umgebungsmerkmals (200) repräsentieren, bestimmt werden, welche mit den ersten Positionsdatenwerten verknüpft werden.

4. Vorrichtung (110) nach Anspruch 3, **dadurch gekennzeichnet, dass** die dritten Mittel (113) zum Bestimmen von den zweiten Positionsdatenwerten derart ausgebildet sind, dass die relativen Positionsdatenwerte den Abstand (210) zwischen dem Fahrzeug (100) und dem erfassten Umgebungsmerkmal (200) und/oder die Bewegungsrichtung (220) des Fahrzeugs (100) relativ zum erfassten Umgebungsmerkmal (200) und/oder die Geschwindigkeit (230) des Fahrzeugs (100) umfassen.

## Claims

1. Method for localizing a vehicle (100), comprising the following steps:
- reading first position data values that represent a position of a surroundings feature (200) in the surrounding area of the vehicle (100), wherein the first position data values are taken from a map (105) comprising the surroundings feature (200);
- controlling an illumination unit (120) of the vehicle, in dependence on the read first position data values, to adapt lighting (130, 140) of the surroundings feature (200), wherein the illumination unit (120) is controlled such that the surroundings feature (200) is at least partially lit by the illumination unit (120) such that the surroundings feature (200) is capturable by means of at least one video sensor (101) of the vehicle (100); and
- determining second position data values that represent a position of the vehicle (100), starting from the position of the surroundings feature (200), the lighting (130, 140) of which is adapted by the illumination unit (120) of the vehicle (100), wherein the second position data values are determined by the at least partially lit surroundings feature (200) being captured by the at least one video sensor (101) of the vehicle (100) and in this way relative position data values that represent a position of the vehicle (100) relative to the position of the captured surroundings feature (200) being determined, which are linked to the first position data values.

2. Method according to Claim 1, **characterized in that** the relative position data values comprise the distance (210) between the vehicle (200) and the captured surroundings feature (200) and/or the movement direction (220) of the vehicle (100) relative to the captured surroundings feature (200) and/or the speed (230) of the vehicle (100).

3. Apparatus (110) for localizing a vehicle (100), comprising the following means:
- first means (111) for reading first position data values that represent a position of a surroundings feature (200) in the surrounding area of the vehicle (100), wherein the first means (111) for reading are configured such that the first position data values are taken from a map (105) comprising the surroundings feature (200);
- second means (112) for controlling an illumination unit (120) of the vehicle (100), in dependence on the read first position data values, for adapting lighting (130, 140) of the surroundings feature (200), wherein the second means (112) for controlling the illumination unit (120) are configured such that the surroundings feature (200) is at least partially lit by the illumination unit (120) such that the surroundings feature (200) is capturable by means of at least one video sensor (101) of the vehicle (100); and
- third means (113) for determining second position data values that represent a position of the vehicle (100), starting from the position of the surroundings feature (200), the lighting (130, 140) of which is adapted by the illumination unit (120) of the vehicle (100), wherein the third means (113) are configured to determine the second position data values such that the at least partially lit surroundings feature (200) is captured by the at least one video sensor (101) of the vehicle (100) and in this way relative position data values that represent a position of the vehicle (100) relative to the position of the captured surroundings feature (200) are determined, which are linked to the first position data values.

4. Apparatus (110) according to Claim 3, **characterized in that** the third means (113) for determining the second position data values are configured such that the relative position data values comprise the distance (210) between the vehicle (100) and the captured surroundings feature (200) and/or the movement direction (220) of the vehicle (100) relative to the captured surroundings feature (200) and/or the speed (230) of the vehicle (100) .

## Revendications

1. Procédé de localisation d'un véhicule (100), comprenant les étapes suivantes :
- lecture de premières valeurs de données de position, lesquelles représentent une caractéristique d'environnement (200) dans l'environnement du véhicule (100), les premières valeurs de données de position étant prélevées depuis une carte (105) qui comprend la caractéristique d'environnement (200) ;
- commande d'une unité d'éclairage (120) du véhicule en fonction des premières valeurs de données de position lues en vue d'adapter un éclairement (130, 140) de la caractéristique d'environnement (200), la commande de l'unité d'éclairage (120) s'effectuant de telle sorte que la caractéristique d'environnement (200) est éclairée au moins proportionnellement par l'unité d'éclairage (120) de manière à ce que la caractéristique d'environnement (200) peut être détectée au moyen d'au moins un capteur vidéo (101) du véhicule (100) ; et
- détermination de deuxièmes valeurs de données de position, lesquelles représentent une position du véhicule (100), en partant de la position de la caractéristique d'environnement (200), dont l'éclairement (130, 140) par l'unité d'éclairage (120) du véhicule (100) est adapté, les deuxièmes valeurs de données de position étant déterminées en détectant la caractéristique d'environnement (200) éclairée au moins proportionnellement par l'au moins un capteur vidéo (101) du véhicule (100) et en déterminant ainsi des valeurs de données de position relatives qui représentant une position du véhicule (100) par rapport à la position de la caractéristique d'environnement (200) détectée, lesquelles sont liées aux premières valeurs de données de position.

2. Procédé selon la revendication 1, **caractérisé en ce que** les valeurs de données de position relatives comprennent la distance (210) entre le véhicule (200) et la caractéristique d'environnement (200) détectée et/ou le sens de déplacement (220) du véhicule (100) par rapport à la caractéristique d'environnement (200) détectée et/ou la vitesse (230) du véhicule (100).

3. Dispositif (110) de localisation d'un véhicule (100), comprenant les moyens suivants :
- des premiers moyens (111) destinés à la lecture de premières valeurs de données de position, lesquelles représentent une caractéristique d'environnement (200) dans l'environnement du véhicule (100), les premiers moyens (111) destinés à la lecture étant configurés de telle sorte que les premières valeurs de données de position sont prélevées depuis une carte (105) qui comprend la caractéristique d'environnement (200) ;
- des deuxièmes moyens (112) destinés à la commande d'une unité d'éclairage (120) du véhicule (100) en fonction des premières valeurs de données de position lues en vue d'adapter un éclairement (130, 140) de la caractéristique d'environnement (200), les deuxièmes moyens (112) destinés à la commande de l'unité d'éclairage (120) étant configurés de telle sorte que la caractéristique d'environnement (200) est éclairée au moins proportionnellement par l'unité d'éclairage (120) de manière à ce que la caractéristique d'environnement (200) peut être détectée au moyen d'au moins un capteur vidéo (101) du véhicule (100) ; et
- des troisièmes moyens (113) destinés à la détermination de deuxièmes valeurs de données de position, lesquelles représentent une position du véhicule (100), en partant de la position de la caractéristique d'environnement (200), dont l'éclairement (130, 140) par l'unité d'éclairage (120) du véhicule (100) est adapté, les troisièmes moyens (113) destinés à la détermination de deuxièmes valeurs de données de position étant configurés de telle sorte que la caractéristique d'environnement (200) éclairée au moins proportionnellement par l'au moins un capteur vidéo (101) du véhicule (100) est détectée et des valeurs de données de position relatives, lesquelles représentent une position du véhicule (100) par rapport à la position de la caractéristique d'environnement (200) détectée, sont déterminées, lesquelles sont liées aux premières valeurs de données de position.

4. Dispositif (110) selon la revendication 3, **caractérisé en ce que** les troisièmes moyens (113) destinés à la détermination de deuxièmes valeurs de données de position sont configurés de telle sorte que les valeurs de données de position relatives comprennent la distance (210) entre le véhicule (100) et la caractéristique d'environnement (200) détectée et/ou le sens de déplacement (220) du véhicule (100) par rapport à la caractéristique d'environnement (200) détectée et/ou la vitesse (230) du véhicule (100).
